# EUROPEAN PATENT SPECIFICATION

(11) **EP 1 792 256 B1**
(45) Date of publication and mention of the grant of the patent: **07.03.2018**
(21) Application number: 05794262.5
(22) Date of filing: 06.09.2005
(51) Int. Cl.: G06F 11/14

(54) **METHODS, SYSTEMS AND COMPUTER PROGRAM PRODUCTS FOR IMPLEMENTING SINGLE-NODE AND CLUSTER SNAPSHOTS**
VERFAHREN, SYSTEME UND COMPUTERPROGRAMMPRODUKTE ZUM IMPLEMENTIEREN VON EINZELKNOTEN- UND CLUSTERSCHNAPPSCHÜSSEN
PROCÉDÉS, SYSTÈMES ET PRODUITS DE PROGRAMME INFORMATIQUE POUR IMPLÉMENTER DES INSTANTANÉS DE SIMPLE NOEUD ET DE GRAPPES

(30) Priority: 03.09.2004 US 606898 P
(43) Date of publication of application: 06.06.2007
(73) Proprietor: Red Hat, Inc., Raleigh NC 27606 (US)
(72) Inventor: MARZINSKI, Benjamin, Elliot, Minneapolis, MN 55407 (US); PHILLIPS, Daniel, Raymond, Toronto, Ontario M2J 1X6 (CA)
(74) Representative: HGF Limited
(86) International application number: PCT/US2005/031439
(87) International publication number: WO 2006/029032

(56) References cited:
- EP-A- 1 424 632
- WO-A1-02/065275
- US-A1- 2003 158 863
- US-A1- 2003 159 007
- US-A1- 2004 133 602
- US-B1- 6 289 356
- US-B1- 6 341 341
- US-B1- 6 636 878
- SOULES ET AL.: 'Metadata Efficiency in Versioning File Systems' PROCEEDINGS OF FAST '03: 2ND USENIX CONFERENCE ON FILE AND STOREAGE TECHNOLOGIES, SAN FRANCISCO, CA USA 31 March 2003 - 02 April 2003, pages 43 - 58, XP008073403
- BATORY ET AL.: 'GENESIS: An Extensible Database Management System' IEEE TRANSACTIONS OF SOFTWARE ENGINEERING vol. 14, no. 11, November 1988, pages 1711 - 1730, XP000002179
- WHITAKER ET AL.: 'Design of the Server for the Spiralog File System' DIGITAL TECHNICAL JOURNAL vol. 8, no. 2, 1996, pages 15 - 31, XP008073345

## Description

### Field of the Invention

The present invention relates in general to snapshot techniques for making copies of data on a disk and more particularly to snapshots implemented using copy-on-write or remapping techniques.

### Background of the Invention

In a typical enterprise-computing system, a file system is relied on to store, organize, keep track of, and make available the files generated by its users. The enterprise computing system may have hundreds or even thousands of users, and the file system is required to support large numbers of users reading from and writing to one or more disk storage devices managed by the file system. In many systems, the file system should be continuously available and cannot be shut down temporarily without incurring high business costs.

Full-system backup copies can be used to restore files in the event of a system failure, accidental deletion, file corruption, unintended edits, etc. Regularly making backups is an essential safety measure in many systems. In order to make a backup of a file system using traditional copying techniques, it is necessary that the contents of the file system be stable. If the file system is active, then changes may be made to the contents, even as they are being copied. Thus, the file system must be "off-line" in order to make an effective back up. In a typical enterprise environment, this process may be performed at night or during off hours. The file system may be unavailable for several hours each night or once a week as the contents of the file system are read out and copied to tape. The end result is a physical copy of the original data. As enterprises grow ever larger, and the stored data accumulates, the volume of data that has to be copied increases. As a result, the amount of time that it takes to make a backup of the file system using traditional techniques is no longer manageable. In some systems, it may take more than a day to make a backup copy. It may be unacceptable to take a file system offline for such a long time.

It is possible to make a copy of an entire file system without interrupting the operation of the file system: A 'snapshot' is a virtually instant copy of a defined collection of data created at a particular instant in time. Backups and other functions can be performed in
a leisurely way on a snapshot image without impacting system availability. Beyond online backup, snapshots have various uses. For example, one might create a snapshot of a storage device before making a trial install of some new system software. If the install is unsuccessful, the storage device can be reverted back to its pre-installation state by copying the snapshot back to the storage device.

Snapshots may be implemented at a block level, where the storage device contents are viewed as mere blocks of data, or at a file system level, where the file system contents are viewed as having a particular organization. The latter implementation may be more efficient since without explicit knowledge of file system structure it can be difficult impossible to know which blocks are free and which are not. In the absence of that knowledge, a block level snapshot scheme would sometimes waste time preserving snapshot data that is just file system free space. On the other hand, it is much simpler to implement snapshots at a block level than to incorporate them into the design of a possibly already-complex file system. Furthermore, a block level snapshot works for all file systems, not just one particular file system. Also, implementing snapshots at a block level provides a natural way of representing a snapshot to the system: as a virtual block device.

A snapshot is typically implemented conceptually as a list of changes made to a target file system *(i.e.,* a file system to be backed up) since a previous snapshot was "taken." The target file system does not have to be taken offline. The target file system includes code to monitor data accesses and implement a copy-on-write technique, (e.g., copying the original data to snapshot storage when the original data is about to be written over). The snapshot can be constructed when needed by combining the information on the file system with the list of changes and backtracking.

Multiple snapshots of the same file system may be maintained simultaneously, each created at a different point in time. In Linux, this has been implemented in a straightforward way by giving each snapshot its own fixed-size storage area. This approach, though simple, has serious drawbacks. Each time a block of data is changed on the file system, it must be written to the storage for each snapshot to which it belongs. The cost of these multiple writes increases directly with the number of snapshots held. In practice, performance degrades noticeably with more than one or two simultaneous snapshots. Depending on the lifetime of a snapshot and the number of changes made to the original file system, each snapshot store may need to be as large as the original disk. In the absence of some scheme to allocate storage on demand, these multiple snapshot stores may be largely empty. It is also probable that multiple redundant copies of data will be stored.

In many environments, storage systems are clustered. Multiple server-class systems may access the same storage. The clients of the storage system need to communicate amongst themselves in order to use the storage system in a coordinated way to avoid interleaving their changes in a nonsensical way. All members of a cluster should receive a consistent view of possibly multiple snapshots, even while other members of the cluster may be simultaneously writing to the same snapshots. One method is to shut down the file system long enough to copy the physical block device to auxiliary storage. Hence, no changes would be made to the original during the copy. However, it is generally not practical to force the systems in the cluster to halt.

Reference is made to WO 02/065275 A1, which discloses storage virtualization systems and methods that allow customers to manage storage as a utility rather than as islands of storage which are independent of each other. A demand mapped virtual disk image of up to an arbitrarily large size is presented to a host system. The virtualization system allocates physical storage from a storage pool dynamically in response to host I/O requests, e.g., SCSI I/O requests, allowing for the amortization of storage resources through a disk subsystem while maintaining coherency amongst I/O RAID traffic. In one embodiment, the virtualization functionality is implemented in a controller device, such as a controller card residing in a switch device or other network device, coupled to a storage system on a storage area network (SAN). The resulting virtual disk image that is observed by the host computer is larger than the amount of physical storage actually consumed.

Reference is also made to: US 6 636 878 B1; US 2003/158863 A1; US 6 289 356 B1; EP 1 424 632 A; US 2003/159007 A1; and US 2004/133602 A1.

### Summary of the Invention

The invention is defined by the claims.

### Brief Description of Drawings

Embodiments of the present invention will be best understood when read in reference to the accompanying figures wherein:
Fig. 1 is a block diagram illustrating an example clustered network that can be used to run various embodiments of the present invention;
Fig. 2 is a diagram graphically illustrating various chunks as they are shared and unshared between snapshots and an origin in accordance with various embodiments of the present invention;
Fig. 3 is a diagram graphically illustrating various messages that can be exchanged between a client and a server for a read operation in accordance with various embodiments of the present invention;
Fig. 4 is a diagram graphically illustrating various messages that can be exchanged between a client and a server for a read operation in accordance with various embodiments of the present invention;
Fig. 5 is a diagram graphically illustrating an example btree in accordance with various embodiments of the present invention;
Fig. 6 is a diagram graphically illustrating an example leaf node of a btree in accordance with various embodiments of the present invention; and
Fig. 7 is a diagram graphically illustrating various chunks as they are shared and unshared between snapshots and an origin in accordance with various embodiments of the present invention.

Following are various terms/phrases and their definitions:

### Origin volume (or origin):

One of two block devices underlying a virtual snapshot device. This volume holds the "current" data and is mapped one-to-one to a snapshot origin virtual device. Although the virtual device could be removed and the underlying origin volume accessed directly, such a process may cause the loss of the integrity of any snapshots sharing data with the origin.

### Snapshot store:

One of two block devices underlying a virtual snapshot device. This volume contains data chunks that were copied from the origin in order to preserve the integrity of snapshot data, or were written directly to the snapshot store via a snapshot virtual device. It also contains all metadata required to keep track of which snapshot store chunks belong to which snapshots, among other things.

### Copy-out:

The act of preserving a chunk of origin data by copying it to snapshot store.

### Chunk:

The granularity of snapshot copy-outs, e.g., a user-definable binary multiple of 4K block size.

### Exception:

An execution includes metadata indicating a particular chunk of disk is no longer shared between one or more snapshots and/or the origin. An exception also includes information relating to the location of the unshared data.

### A snapshot server:

A snapshot server is a process running on a computer, which may possibly also be running client origin and/or snapshot clients.

### Snapshot Client:

A snapshot client is kernel code that implements a virtual view of a snapshot.

### Origin Client:

An origin client is kernel code that implements a virtual view of an origin volume.

### Detailed Description of the Invention

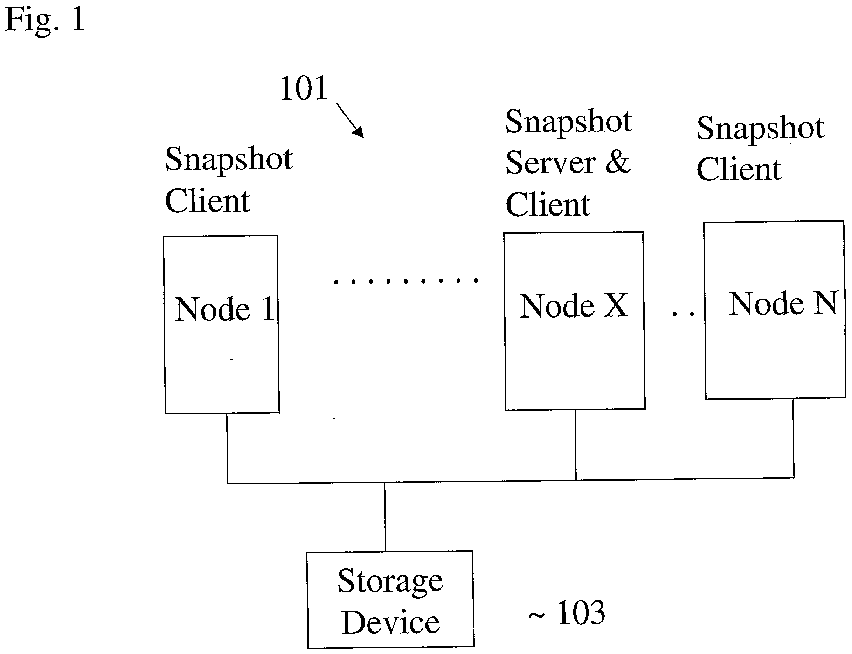

Fig.1 illustrates an example set of nodes (*e.g.,* computers) in a clustered system 101 that can be used to implement various embodiments of the present invention. The example includes a number of nodes on which snapshot clients (and/or an origin client) can run (*e.g*., Node 1 through Node N, where "N" and "X" are arbitrary integers). A snapshot server is shown as running on Node N; however, the snapshot server can run on other nodes (*e.g.,* any one of Node 1 through Node N) as well. A storage device 103 can be connected to the nodes. The origin and snapshot stores use the storage device 103 to store the origin data and snapshot data. The storage device can be any conventional storage devices (*e.g*., a disk farm, a RAID disk array, etc.).

In various embodiments of the present invention, multiple snapshots and origin share the same block device. These techniques enable snapshots to share preserved data. Data preserved by copyouts from the target file system are tracked and coordinated to ensure that it is tied into and can be located for each snapshot to which it belongs.

Systems that are used in various embodiments of the present invention share the data between multiple snapshots whenever possible, both to reduce copying time and to save space. In order to support this sharing capability, various embodiments of the present invention include data structures to keep track of which data is shared by which snapshots and a space allocation scheme for the snapshot store. These structures are both persistent and durable. Various embodiments of the present invention also implement cluster snapshots.

Various embodiments of the present invention can also use a bitmap to manage the allocation of snapshot store data, metadata. Various embodiments of the present invention also use a btree to keep track of snapshot data membership and a journal to make those structures durable. The code to manage a snapshot store resembles a file system in some respects.

For cluster snapshots, network communication between cluster members can be used for:
1. Discovering which physical data blocks belong to a given snapshot;
2. Synchronizing access to block level data shared between a snapshot and origin; and
3. Synchronizing access to snapshot metadata.

A conventional approach would rely on a distributed lock manager for synchronization, augmented with a message passing protocol to implement the data exchange required for (1) above. Various embodiments of the present invention use a message-passing approach that combines synchronization and data exchange into a single set of messages. This eliminates an entire layer of network synchronization messages, and results in a compact, efficient protocol that is easy to verify.

Used as general-purpose block devices in some systems, snapshots and especially cluster snapshots can operate just like real block devices. In particular, performance should not be noticeably degraded and data written to a snapshot virtual device should not be at any greater risk than data written to a real disk. The latter is a challenging requirement in view of the fact that a real disk is not required to maintain complex data structures to do its work. The cluster snapshot, on the other hand, should maintain complex data structures durably, in other words, without being subject to corruption in the event of a sudden interruption, such as a power failure. A user would not expect a real disk to become corrupted in that case, and so has the same high expectations on a virtual disk. Various embodiments of the present invention achieve this durability without degrading performance. Various embodiments of the present invention batch together data structure updates. A localized group of writes to virtual volume data should result in a batch of localized updates to the volume metadata, which can be transferred to disk as a single transaction. A journal is used to make the transaction atomic and durable. The batching makes it efficient.

For snapshots in a clustered network (*e.g.*, Fig. 1), the snapshot store database can be centrally managed by a server process running on one of the cluster nodes. In such embodiments, synchronization and information distribution are performed by way of network messages, which take the form of queries and replies. Since the query protocol is efficient, the client server architecture for various embodiments of the present invention does not impose a large network load and is expected to scale readily to several hundred clients.

Block level snapshots in some systems such as Linux are implemented using a copy-on-write strategy. A similar strategy is used by various embodiments of the present invention. In particular, when a snapshot is first created, it is identical to the origin volume. Afterwards, any attempted write to the origin volume would also be a write operation to the snapshot, which would destroy the integrity of the snapshot. Hence, before the write operation is allowed to proceed, the data that would be overwritten is copied to a snapshot store. Snapshot metadata is also recorded in the snapshot store, in order to keep track of the parts of the origin that have been copied to the snapshot store. This metadata is consulted on each write operation to determine whether or not origin data has already been copied to the snapshot store, and thus is no longer shared with the origin (and does not need to be copied again).

A snapshot can be conceptualized as a virtual block device. Any read or write to this device is intercepted, and the snapshot store metadata is consulted to determine whether the target of the IO (an Input-Output operation) lies on the origin (*i.e.,* hasn't been written to yet by any file system mounted on the origin device) or is in the snapshot store. By preserving overwritten data and then remapping each access to the virtual snapshot device to either the origin or snapshot store as appropriate, a view of a snapshot can be reconstructed on demand. A snapshot view can be accessed through its virtual snapshot device simultaneously with the origin volume, and these two virtual devices can behave as if they were completely independent. The virtual snapshot device takes care of the synchronization required to make this work. Writing to a snapshot through its virtual device is allowed. Data to be overwritten in the snapshot store may not need to be preserved, if it is not shared. If a write to the snapshot device would overwrite origin data, space is allocated for the write in the snapshot store instead. The snapshot metadata is also updated to record the location of any new snapshot store chunk, and which snapshot(s) it belongs to because: 1) The snapshot store metadata records which physical chunks in the snapshot store belong to which snapshots; and 2) A new chunk is allocated in the snapshot store in order to preserve origin data that was about to be overwritten.

Multiple snapshots can be held against an origin volume simultaneously. Any number of these simultaneous snapshots and the origin can be accessed as writable block devices, also simultaneously.

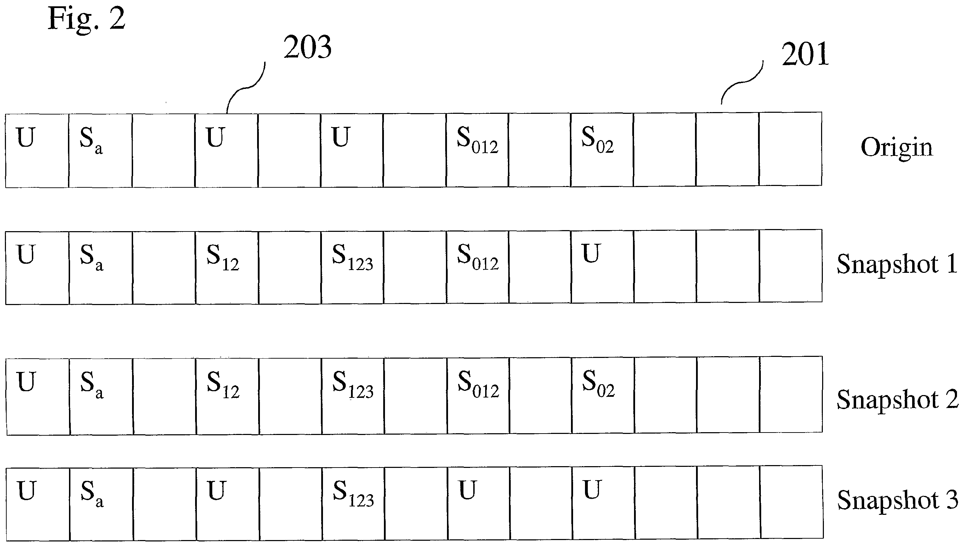

By referring to Fig. 2, shared and unshared chunks can be illustrated. More specifically, the first row 201 represents a set of chunks (each box representing a chunk that includes one or more blocks disk space). In the figure: "U" (*e.g.,* 203) represents that its chunk is unshared; "Sa" represents that its chunk is shared by all; "S₁₂" represents that its chunk is shared by snapshots 1 and 2; and "S_{O12}" represents that its chunk is shared by the origin and snapshots 1 and 2. Although Fig. 2 illustrates only three snapshots, various embodiments of the present invention can include an arbitrary number of snapshots. Blank chunks may contain various combinations of shared and unshared chunks as shown by the examples.

A cluster snapshot device can be, for example, implemented by building on the implementation of a single-node snapshot device. A layer of network synchronization is added, as well as some fail-over hooks. Block data itself is written to or read from the shared block device of the original file system disk and the snapshot store directly by the cluster snapshot client in the same way as if the block device were local. A feature that is added for a cluster snapshot client is that the client decides for each IO request if global synchronization is required, and queries the snapshot server over the network if it is.

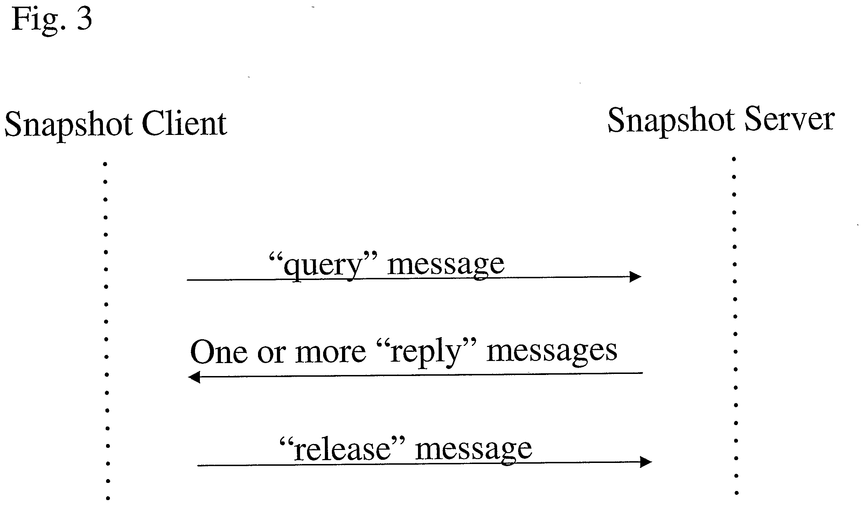

The global synchronization requires nodes to communicate with each other in order to avoid interfering with each other's changes. In one example embodiment, nodes do not communicate directly with each other, but communicate indirectly through the snapshot server, which is a process running on one of the nodes. (See, *e.g.,* Fig. 1.) As shown in Fig. 3, the communication with the server can include:
1) Messages from a client to the server requesting information about a given range of logical blocks, *i.e.,* "query" messages.
2) Responses from the server to the client delivering that information, *i.e.,* "reply" messages. This reply to the query about a range of logical blocks can be multiple messages. In other words, separate reply messages can be sent the client as subsets of the range of the blocks become available.
3) In some cases, release messages indicating that the client has finished doing IO to a given block, *i.e.,* "release" messages.
4) Other message types not relating directly to synchronizing IO, but rather with special situations such as initializing a connection, creating a new snapshot and dealing with failover. The above described example global synchronization can be characterized as a three-message protocol: query, reply, and release.

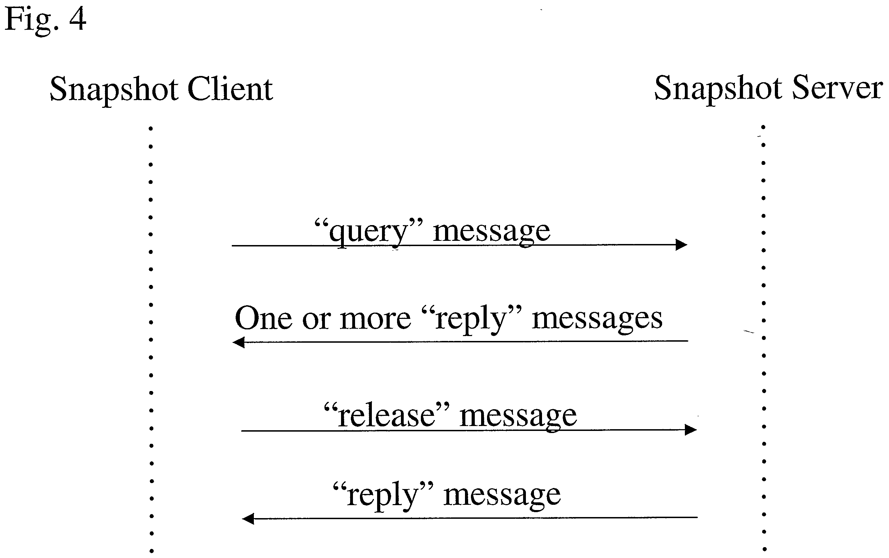

Another example can be a four-message protocol, which is illustrated in Fig. 4: query, reply, release, and reply. Here, the last "reply" message is sent from the server to the client acknowledging the recipe of the release message. The four-message protocol offers the advantage of allowing faster, more robust server failover by requiring that a client would not signal to its caller that a read has completed before receiving an acknowledgment from the server that the final release has succeeded. This means that on failover, the new server does not have to wait for all snapshot clients to reconnect before it resumes servicing write queries, since any snapshot client with reads in progress can retry any reads that could possibly be overwritten by origin writes. With the three-message protocol, the server has to err on the side of caution and require all snapshot clients to reconnect and tell the server which reads they have in progress, so the server can re-establish the locks. With the four-message protocol, the server can ignore the locks and require the client to re-initiate the read from the beginning. This can be a per-client option.

For both the cluster or single-node systems, the questions that a snapshot client should ask are: is a given logical data chunk shared by any snapshot, or is it unique? Is it stored on the origin volume, or in the snapshot store, and if so, at what physical address? For a write, either to the origin or a snapshot, by the time the snapshot server replies to a query about a given logical chunk the chunk is always unique, because the server will make it so if necessary. To make a chunk unique, the server allocates a new chunk in the snapshot store, copies the shared data there, and updates the snapshot metadata. Having ensured uniqueness, the server replies to the query, the client associates the reply with a waiting write request, and finally the device-level write proceeds. In the case of a snapshot store write, the reply includes the physical address of the snapshot store chunk, which is not needed in the origin case because the logical and physical addresses are the same. This scheme ensures that a client node cannot overwrite origin data that is shared by a snapshot, or a shared chunk in the snapshot store, without copying the original data to a new place in the snapshot store first. If a chunk on the origin that belongs to a snapshot has never been changed, it has not been preserved in the snapshot store and will be read directly from the origin.

Reading from the origin is even simpler: no synchronization is required on the part of the snapshot device. This is because there are no metadata updates, and any possible races would also be races on a physical disk. It is the job of a higher-level application (*i.e*., a file system or a database) to prevent such races, and not the snapshot device.

Reading from a snapshot, in contrast, requires an intricate synchronization. The problem is, if a snapshot read references an origin chunk, there could be a simultaneous origin write in progress to the same chunk. If nothing is done to prevent it, the snapshot data could be overwritten while it is in the process of being read. The snapshot device is supposed to act like a physical disk, but it is unlike a physical disk because it can allow data to spontaneously change while being read. No help from cluster file system or application layers can be expected either, because they do not (or cannot) know about the possible interaction of origin and snapshot. The solution provided by various embodiments of the present invention to this race is to provide some locking between origin writes and snapshot reads. When a snapshot read references an origin chunk, the server locks the chunk internally before replying. The snapshot client then initiates the actual read and, on completion, sends a message to the server to release the read lock. Snapshot reads from the origin thus use a three-message protocol, as opposed to origin or snapshot writes, which use two. This also means that there are two possible forms of reply to a snapshot read query, depending on whether the target chunk resides on the origin or in the snapshot store. The latter option includes the address of a snapshot store chunk but does not require any final release message.

An enumeration of cases includes:
- **Origin write to unshared chunk**
   A write to an origin chunk that is not shared *(i.e.,* all snapshots already have exceptions for the chunk) does not require any global synchronization; it is the responsibility of the higher level application to ensure that no other reads or writes race with this write.
- **Origin write to shared chunk**
   A write to an origin chunk that is shared requires global synchronization. This synchronization is accomplished by sending a message to the snapshot server which will ensure that the chunk is not shared, by examining a data structure (e.g., a btree with exceptions, more on this later) and creating a new exception, if necessary. When the client receives the reply, the chunk is guaranteed not to be shared. This reduces to the case above and the write can proceed. When the client doesn't know whether a chunk is shared or unshared it should ask the server, so "unknown" is treated the same as "shared" by the client. Once the server responds that the chunk is known to be unshared, the client can cache this information. The chunk can only become shared again if a new snapshot is set, in which case the client will discard any sharing information it has cached.
- **Origin read from shared or unshared chunk**
   Reads from the origin do not require any global synchronization because the higher level application has the responsibility of ensuring that these do not race with writes to the same volume. Snapshot writes do not collide with origin reads because the destination of a snapshot write is always the snapshot store.
- **Snapshot write to unshared chunk**
   A write to a snapshot logical chunk that is not shared does not require global synchronization.
- **Snapshot write to shared chunk**
   A write to a snapshot chunk that is shared is similar to a write to the origin except that the snapshot server should also return a set of exception store addresses to the client, which the client then caches.
- **Snapshot read from unshared chunk**
   A snapshot read from an unshared chunk does not require any global synchronization.
- **Snapshot read from shared chunk**
   A snapshot read of a shared chunk requires global synchronization to ensure that a write to the same chunk via the origin does not overwrite the data while it is being read. The snapshot server performs this synchronization by locking locally on the snapshot server between writers and readers of shared chunks, details below. Chunks that are locked for reading on a snapshot have to be unlocked after the read is complete, which requires an additional message from the client to the server.
   Similarly to writes to shared chunks, if the client doesn't know that a chunk is shared it must contact the server. The server's response indicates which chunks are unshared and the client can cache this information.

Each chunk in the original message, once acknowledged, is guaranteed to be unique because the server has either determined that each chunk is already unique or it has completed a copy to snapshot store to make it unique. It should be noted that chunks are not necessarily acknowledged in the requested order. A unique chunk can become shared when a new snapshot is set, in fact, at the time a new snapshot is set, all its chunks are shared with at least the origin. For this reason, setting a new snapshot requires that all origin clients discard their bitmaps. Thus, the server sends a "new snapshot" message to every client, and the new snapshot does not become available until every client has acknowledged this message.

### Message Sequences

This section enumerates the messages in each synchronization sequence.

Sequences Initiated by an Origin Client
- Origin write
   ∘ Client sends unique request
      ▪ request gives chunk address range
   ∘ Server responds with initiate
      ▪ empty message, *i.e.,* "write can proceed"
      ▪ server has verified each chunk is unshared or created new exceptions as necessary
      ▪ all chunks are now unique so unique cache can be updated for these chunks

Sequences Initiated by a Snapshot Client
• Snapshot write
   ∘ Client sends unique request
      ▪ request gives chunk address range
   ∘ Server responds with initiate
      ▪ response lists exception addresses, if any
      ▪ after verifying each chunk is unshared, or creating new exceptions where not
• Snapshot read
   ∘ client sends read lock request
      ▪ request chunk address range
   ∘ Server responds with initiate
      ▪ lists exception addresses for non-origin chunks
      ▪ lists which chunks need to be unlocked because they are not unique
   ∘ Client sends unlock when done
      ▪ for non-unique chunks above
• Snapshot create
   ∘ client sends snapshot create message
   ∘ server sends snapshot create advice to each origin client
   ∘ each origin client clears its bitmap cache and acknowledges create
   ∘ server returns create acknowledge

Clients are able to cache query results. An interesting fact about the shared vs. unique state of any given origin chunk is that it is a latch: once a chunk becomes unique (e.g., unshared), it will stay unique until a new snapshot is created, at which point all chunks on the origin are shared with the new snapshot. This means that an origin client can cache the one-bit result of any write query for a given chunk, since it can be relied on to stay unchanged, except when a new snapshot is created. The server broadcasts a message to all origin clients in that case, so that they may clear their caches. Any uncached or zero bit is either shared or 'don't know', the distinction being immaterial.

Snapshot clients may also cache query results, the cached value being a snapshot store address rather than a bit. This cache may not need to be cleared explicitly, although it might be partially or fully cleared in response to memory pressure or under other conditions as described later.

The snapshot store metadata is a simple database, and as such, should satisfy the ACID test: atomicity, consistency, isolation and durability:
(1) Atomicity: A write query that changes the state of the on disk metadata is handled within a single journal transaction, which commits the change to disk atomically.
(2) Consistency: Just as with a physical disk, it is not the job of the snapshot device to make any guarantee about the internal consistency of the data on the device, only that what was written is what will be read back, for any and all simultaneously accessed snapshots and the origin device. In other words, its only responsibility here is to keep the metadata straight.
(3) Isolation: The prototype implementation achieves transaction isolation by the simple expedient of a single-threaded server that handles incoming queries one at a time. This will eventually show up as a bottleneck and more elaborate synchronization will be needed.
(4) Durability: Using the journal, the entire state of the metadata server (with on exception, see below) is always completely recorded on disk at the time any write is acknowledged. Thus, if the metadata server should fail, a new one can be started, read the metadata root, and continue as if nothing had happened.

The one exception to this is that locking state of snapshot read requests against origin writes is kept only in memory on the server. While it is enough to simply require all outstanding reads on clients be completed before a newly started metadata server can resume processing requests, there could be cases where this would cause an unnecessary delay of several seconds on server restart when there is a heavy backlog of IO. In some embodiments, clients will be asked to upload any outstanding locked snapshot reads to the new metadata server before the server resumes processing requests. This should only take a few tens of milliseconds. The total latency of starting a new metadata server then should be measured in tens of milliseconds (though detecting that a server has failed could easily take much longer).

### Server for the cluster snapshots

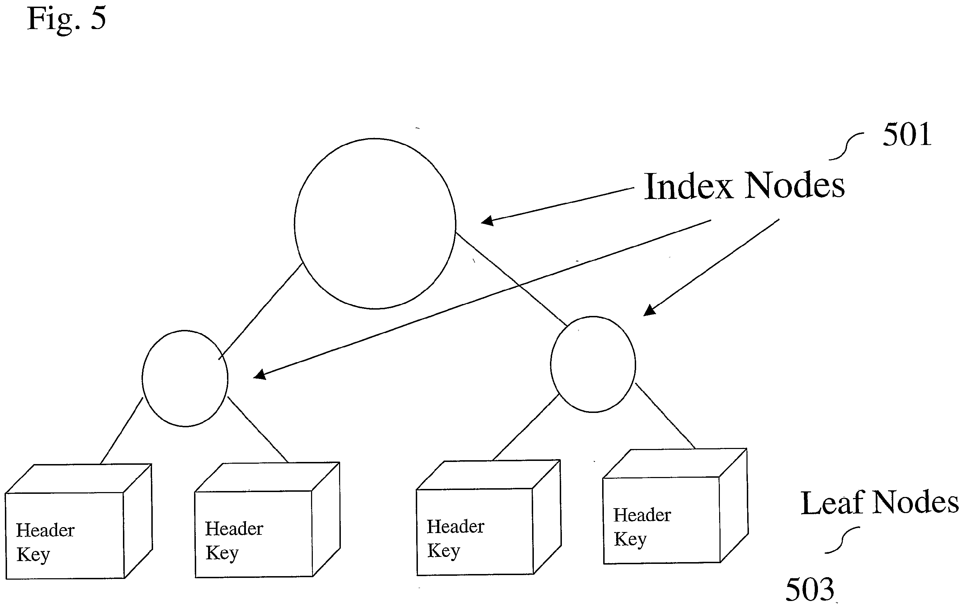

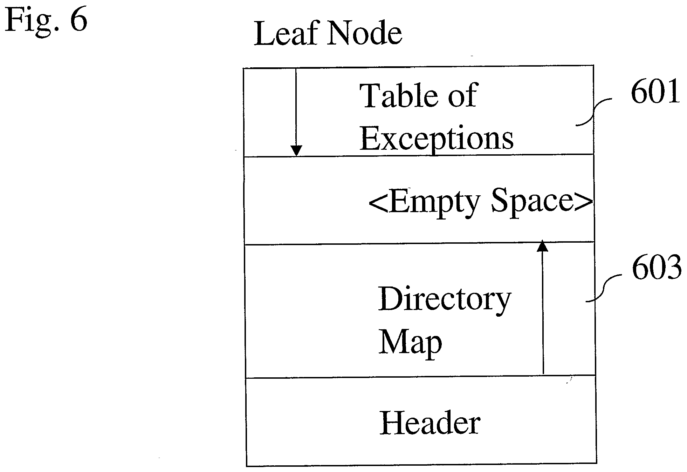

Details of the server implementation for various embodiments of the present invention are described herein. As noted above, a data structure is provided to track chunks that are shared or unshared between various snapshots and the origin. The data structure also includes information relating to the locations of unshared snapshot chunks that have been preserved in the snapshot store. In various embodiments of the present invention, the data structure is implemented by using a btree structure. As shown in Fig. 5, a btree includes a set of index nodes 501 and leaf nodes 503. More specifically, a header includes a table of exceptions 601 and a directory map 603 as illustrated in Fig. 6.

Exceptions for all snapshots are stored in a single btree indexed by logical chunk address. For each chunk, a list of exceptions is stored. Each exception includes a snapshot address and a bitmap specifying which snapshots share that exception. Each time a snapshot chunk becomes unshared an exception is created. Subsequently, when the unshared snapshot chunk is copied to the snapshot store, its address is determined and stored as part of the exception.

The btree is meant to be operated on directly by the snapshot server, as opposed to being translated into some more efficient cache format. To support alignment-restricted architectures, all fields in btree blocks are aligned according to their size. This implementation may prove unnecessary if the compiler's ability to generate alignment-independent code for alignment-restricted architectures proves reliable.

Leaf block format is optimized for rapid lookup and efficient insertion. At the bottom of each leaf is a header and a directory map that grows up towards a table of exceptions, which grows down. Each entry in the directory map gives the logical chunk address relative to a base address stored in the header, and has a pointer to one of the exceptions in the table at the top of the block. The entries are stored in sorted order according to logical chunk address and the pointers increase monotonically.

Using relative addresses allows the map entries to be more compact. In various embodiments of the present invention, map entries include two 32 bit numbers; however, two 16 bit numbers might work just as well and save more space, although a 16 bit relative block number might be so small as to cause a noticeable increase in the number of leaf blocks if exceptions are distributed sparsely. With 32 bit map numbers, a single exception requires 24 bytes. With 16 bit map numbers that would fall to 20 bytes, a 16% savings. Various embodiments of the present invention can also use 64 bit map numbers.

The difference between each two pointers in the map gives the number of exceptions for the chunk. The last entry in the map is a sentinel and points to the top of the block (this could be eliminated to save a few bytes). Each entry in the exception table has the 64 bit sector address of an exception in the snapshot store and a bitmap to indicate which snapshots share the exception.

A binary search is used to locate the target chunk address in the map, if it is present. This yields a list of exceptions on which efficient bitwise operations can be performed to determine sharing. From the point of view of the origin, a logical chunk is shared unless all active snapshots have exceptions for that chunk. From the point of view of a snapshot, a logical chunk is shared if it has no exceptions *(i.e.,* is shared with the origin) or if it has the same snapshot store address as another snapshot.

Using this leaf format, insertion requires memory moves in order to maintain the entries in sorted order, and the memory moves get longer as the leaf block fills up. For relatively small leaf blocks, *e.g*. 4K, it is probably not a problem. Other equivalently efficient leaf formats are certainly possible, though perhaps they may not be as simple.

As the number of snapshots increases, update overhead of the btree increases more or less linearly, albeit with a gentle slope. In various embodiments of the present invention, it is desirable to adopt a variant leaf format capable of encoding runs of adjacent exceptions efficiently.

An index node may contain a table of entries each of which includes, *e.g*., a 64 bit logical chunk address key and a 64 bit sector address of a lower level index node or, at the lowest index level, a leaf. The entries are in sorted order by logical chunk address. Two successive keys bound the range of entries contained by the lower level node.

To locate the leaf block in which exceptions, if any, are stored for a given logical address, a search program can descend recursively from the root, performing a binary search on the address key in each block and descending recursively into the node referenced by the sector address lying between the two keys that bound the target key.

In various embodiments of the present invention, a search can be conducted all the way to a leaf node even if examining a region of the address space that is completely empty. For write requests, this procedure may not be inefficient because an exception can be immediately added to the leaf node if one is not present. For read requests it's a little more work than necessary but this may not be significant since it only affects snapshot reads, and only by a small amount (origin reads do not involve the server).

Any altered metadata block, *i.e.,* btree leaf and index nodes, allocation bitmaps, etc, are written to a journal before being written to their final destinations. This guarantees that the metadata can be restored reliably to the state of the most recently committed exception or other metadata change.

In various embodiments of the present invention, the size and location of the journal can be determined at the time the snapshot store is created and may not be changed. Each journal transaction includes an arbitrary number of data blocks followed by a journal tag block. The tag block carries a magic number allowing it to be identified as such for the purpose of journal replay, and a sequence number used to locate the starting point for journal replay. Any data block written to the journal that happens to have the same number at the same location should be escaped by writing a zero to that location in a copy of the data. The tag block carries a list of snapshot store sector addresses that are the final destinations of the data blocks. The low bit of the address carries a bit flag indicating that the data block was escaped and the magic number needs to be restored before the data block is finally written. The tag block carries other miscellaneous information such as partial usage status of a chunk recently allocated for metadata.

In various embodiments of the present invention, free space in the snapshot store can be managed via bitmaps with a resolution of one bit per chunk. Each bitmap is, *e.g.,* one 4K block in size and maps 2**15 chunks. The bitmap blocks are indexed via a radix tree rooted in the header. Each radix tree node contains, *e.g*., 512 8-byte sector addresses. As a slight simplification this tree can be, *e.g.,* 3 levels deep, giving 2^27 * 2^15 = 4 trillion chunks, or 16 petabytes volume size limit with a minimal 4K chunk size. It is always fully populated, *i.e.,* the tree is created at the time the snapshot store is created and changed only if the snapshot store is expanded. The second lowest level of the bitmap index tree is loaded into memory when the volume is activated, this will be about, *e.g*., 512 KB per terabyte of snapshot store.

Bitmaps are cached in buffers and accessed via getblk. A pointer is kept to the most recently accessed bitmap, *i.e.,* it is not released until a different bitmap is accessed, which eliminates the majority of getblk lookups assuming reasonably good locality of allocation. Likewise, a pointer is kept to the most recently accessed index block. Since nearly all accesses to bitmaps are associated with changing the bitmap, the bitmaps are kept near the journal rather than being distributed throughout the snapshot store. This is purely a matter of allocation policy since the actual locations of bitmaps are determined by the radix tree.

Since metadata is allocated in blocks but allocation granularity is chunks, some chunks allocated to metadata may be only partially full. To avoid leakage of this unallocated space on unexpected restart, any partial allocations are recorded in the journal tag block. As a side effect, this means that a few metadata blocks can be allocated before a bitmap needs to be modified, saving some journal bandwidth.

A prototype implementation uses a simple, wraparound allocation scheme for both snapshot store data and metadata. If snapshots are held over extended periods, the snapshot store may become fragmented, reducing the efficiency of IO transfers. While this may not be a serious problem for backup applications, it certainly will be a problem for a user that wishes to use a snapshot in place of the origin device. To provide this type of usage, a more sophisticated allocator is contemplated. To facilitate efficient data transfer, exception store chunks that are logically close together should be stored physically close together. Because of chunk sharing, this can not be done perfectly in general; rather, an improved average case is sought in various embodiments of the present invention. At a higher level, many file systems implicitly rely on details of layout linearity, for performance reasons. The allocator should avoid violating such assumptions.

Synchronization via locking is only required between snapshot reads and origin writes. This locking takes place entirely within the server so no cluster lock manager is involved. (In fact the server is a lock manager for the limited case of snapshot reads.) The locks are simple, hashed locks. The cost of this locking is one hash lookup per snapshot read or origin write of a shared chunk, plus the unlock messages. This locking is only required when snapshot and origin virtual devices are active at the same time. For instance, the server does not have to take any locks to service origin write requests if no snapshot device is active, even if snapshots are being held.

Snapshot deletion requires special handling. Because it packs together information for multiple snapshots in each leaf node, the exception btree is optimized for lookup and exception insertion as it should be. However, snapshot deletion is not as simple an operation as it would be if each snapshot had its own tree. (But if each snapshot had its own tree then exception creation time would increase with the number of snapshots, much more space would be used for multiple snapshots and keeping track of exception sharing would be less efficient.) In general, deleting a snapshot requires examining the entire btree and modifying each leaf block that contains an exception for the snapshot. This could amount to quite a lot of IO traffic and take a significant amount of time. The snapshot server will therefore simply log the status of the snapshot as "in process of deleting" and indicate completion immediately to the requesting client. The actual deletion can proceed in the background. When the deletion is finished, which could require tens of seconds for a large volume, the snapshot is logged as available for reuse.

A possible optimization is to defer deletions until several snapshots can be deleted in one pass, which may require less time than deleting each individually. How much less depends on how common it is for exceptions of several snapshots being deleted to lie in the same btree node. Another possible optimization is to include in each index node a bitmap indicating which snapshots have exceptions in the subtree descending from that node so that entire subtrees can be skipped during the traversal if they do not need to be modified.

Another possible optimization involves introducing the concept of snapshot set generations and tagging each leaf block with a snapshot generation as of the most recent alteration. Then a snapshot could be deleted by creating a new generation that does not include the deleted snapshot. A leaf block tagged with an earlier generation would be seen as "stale" and would be modified when next encountered, to remap it to the current generation, removing exceptions belonging to deleted snapshots in the process.

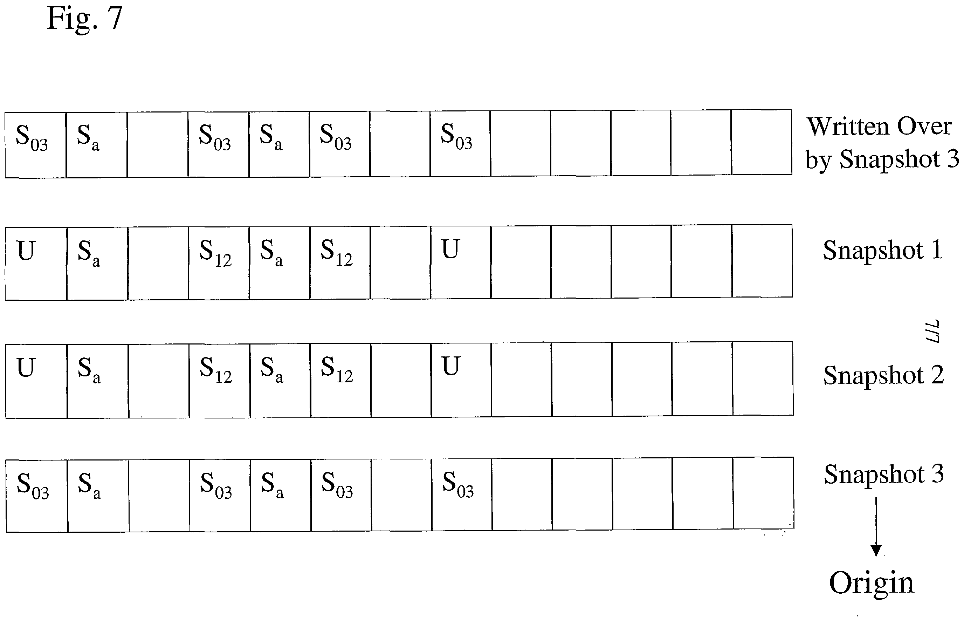

In various embodiments of the present invention, an entire snapshot can be copied to the origin as illustrated in Fig. 7. In that example "Snapshot 3" is copied to the origin. In particular, the server receives a request to transfer one of the snapshots to the origin. The request includes a unique identifier for the snapshot. The server checks whether the origin device is currently in use. If the origin device is currently in use, the server sends back a failure reply. Once the server has determined that the origin device is not in use, it locks the origin device, so that the origin device cannot be used during the snapshot transfer.

Subsequently, the server traverses the btree, searching for chunks with an exception for the selected snapshot. For each chunk found:
A. The server attempts to lock the chunk.
   i. If the lock fails, the server processes all the outstanding requests, and retrys.
      a. If any outstanding request is to transfer a snapshot to the origin, the server sends back a failure reply.
B. Once the server has locked the chunk, it modifies the metadata such that:
   i. An single exception is created for all snapshots that currently share the chunk with the origin to indicate that they no longer share the chunk with the origin. The data for the chunk is copied from the origin to free space on the snapshot device, and the location of this data isstored in the exception
   ii. The selected snapshot, and all other snapshots that share the exception with the selected snapshot, now share the chunk with the origin.
C. The data for the exception for the selected snapshot is copied to the origin device.
D. The exception and the data are deleted.

Following the above-described operations, the server sends messages to all clients of the selected snapshot to clear their respective cache, and the server unlocks the origin device. The server can also send a reply indicating that the copy has been successfully completed. As a graphical illustration, Fig. 7 shows that the origin chunks are identical to Snapshot 3 after copying Snapshot 3 chunks to the origin.

In some cases it may be useful to expand the snapshot store. The only tricky part of expanding the snapshot store is increasing the size of the allocation bitmap table. These are held in a radix tree to facilitate this. New index and bitmap blocks are added on the right. Options are to keep the bitmap blocks near the journal, or to disperse them throughout the snapshot store, nearby the snapshot store areas that they map. In various embodiments of the present invention, all bitmap blocks are located near the base of the snapshot store, which was the simplest way to implement. Once the bitmap allocation table is expanded, the new size of the snapshot store is recorded in the superblock.

Since in various embodiments of the present invention the cluster snapshot client connects to the snapshot server, solely by means of a network socket, the server can be implemented in user space rather than kernel. Fully asynchronous IO is considerably more difficult to achieve in user space than in kernel code, and certain operations could well be less efficient. It is contemplated that the server can be implemented in kernel. This might also be desirable when implementing a single-node variant.

The snapshot server's handling of its disk-based btree amounts to a caching problem. As such, this may be implemented using the Unix "getblk" as a model. It lends itself well to incremental updating of the btree, bitmaps and other file-backed data items. It supports asynchronous writing and multi-threaded writing well. This implementation also simplifies the task of porting the server to kernel space.

### An asynchronous stream messaging model

The snapshot server uses an asynchronous stream messaging model over a socket transport. A simple message formatting model was devised in which each message header has just two fields: code and length. Since the messages themselves tend to be small and numerous, the size of the message header has a significant effect on network load. For instance, every field that can be moved out of the header into the message body should be. This way, messages do not incur size penalties for fields they do not require.

Generally, two socket read operations are performed for each incoming message, the first to learn the size and a second to read the message body. The size of the message header could be further reduced, since the size of many messages can be inferred from the message code; however, doing so would require three reads instead of two for variable length messages. Eight byte message headers can be used.

Outgoing messages are typically sent directly from a process stack in a single socket write operation. Syntactic macro *sugar* is provided that allows fixed-length messages to be expressed in a single-line functional style, using symbolic fields as opposed to positional.

Message contents are binary, which requires careful attention to considerations of field alignment, size and byte order. All numeric fields can be converted to network byte order on sending and native order on receiving. Message format can be defined using gcc-specific packed structure attributes, which in theory provides predictable field size and alignment, and alignment independence across processor architectures.

A fully asynchronous message model can be used in which the sender never waits for a reply. Instead, the sender implements an incoming message handler capable of handling any message that might be received, including message replies. Any required state transformations can be implemented within the incoming message handler, which runs as its own task. Thus, synchronous messages requiring replies, such as the client's initial "identify" message, should be handled with interprocess communication while asynchronous messaging is the default.

### Client

Details of the client implementation in various embodiments of the present invention are described herein. There are two kinds of clients: snapshot and origin. In practice, the two kinds are implemented in a single code file, and a stored variable is used to distinguish between them where necessary. The snapshot client can be implemented as a device mapper target. It is responsible for deferring IO requests as appropriate, querying the server for information it does not have in cache, receiving replies, and submitting requests to the correct device. It should also worry about releasing snapshot read locks, and a handle a few system interface details, such as setting up a network socket connection to the snapshot server, reconnecting if the connection is broken, and responding to the occasional message to clear cache because a new snapshot was created. Essentially, the client implements some simple message handling and a cache, the latter being non-essential.

On initialization, the client is passed a snapshot number (-1 = origin) and the local device names of two shared storage devices: the origin and the snapshot store. The client starts two kernel daemons, one being a blocking thread to handle server replies and the other, a nonblocking worker thread to take care of various minutiae. At this point the client initialization completes and the virtual device appears in the /dev/mapper directory. It can receive IO requests, but not complete them yet, because it does not have a socket connection to the server. A user space utility supplies this later via an ioctl on the virtual device.

Finally, before it can complete any IO requests, the client identifies itself to the snapshot server, stating for which snapshot it is a client. The server informs the client of the chunk size, then the client initializes its cache and proceeds to send queries, receive replies and retire IO requests.

The client-side query cache is implemented as an inode address space. This has the advantage that it is managed automatically by the VM system: when there is no memory pressure, the cache will grow without bound, but when there is, the VM system can easily shrink it.

### Failure Tolerance

Though challenging to implement efficiently, the ACID properties of consistency and durability immediately yield an important benefit: fail-over of the snapshot server is trivial. This is because all the server state information connected with completed IO requests is always available on disk. State information for uncompleted IO requests is always maintained in the memory of clients, and none needs to be uploaded to the new server. Restarting the snapshot server is the same as starting it initially, except that snapshot clients (but not origin clients) must upload their pending snapshot read locks before the server may allow any origin writes to proceed. A future optimization to eliminate copy-on-write for snapshot writes will require similar treatment in-progress snapshot writes. Otherwise, the new server need only load the snapshot store superblock and replay the journal. Finally, there is no requirement to clear client cache. So server restart is very fast, on the order of tens of milliseconds. Detecting server failure is likely to take much longer. There will be some slight performance degradation due to the loss of server metadata cache and the need for snapshot clients to retry pending reads, but it is unlikely to be noticeable. The server notices that a client has failed when its socket connection breaks. In response, the server releases any snapshot read locks held by that client.

Cluster heartbeating in itself is insufficient to detect some common failure conditions. For example, a node might continue responding to heartbeat messages, even though its cluster snapshot device has stopped servicing IO requests for one reason or another, e.g., a memory failure. If that client holds crucial read locks, the entire cluster could lock up. So at least in the case of snapshot clients, the server must detect timeouts and ping the client for liveness. If the client fails the test, the server will break its socket connection and release its locks. It is possible that the client may simply be slow, not dead, in which case it will reconnect to the cluster and carry on. Similarly, clients need to detect server problems that heartbeating may miss. If a snapshot or origin client detects a timeout, it should report it to the cluster infrastructure so that further remedial action may be taken. It may be that the cluster resource manager or human administrator simply assigned the server to an under-powered or overloaded node, in which case the correct action is to restart the server on a more appropriate node. In any event, this is not a problem that heartbeating can detect.

### Interface to Cluster Infrastructure

The cluster snapshot block device was designed to be operated either manually or under the control of a cluster manager system. Its needs are modest: it requires a socket connection to a snapshot server, and it needs a way of reporting errors when things go wrong. For example, if its server connection breaks, it needs to be able to request a new one. These are the only things it requires beyond the existing Device Mapper infrastructure.

A user space program connects a socket to the virtual device after Device Mapper has instantiated it via an ioctl on the virtual device, passing the FD number of a socket it has opened. A simple utility is provided so that this may be done from the shell, for the purpose of running the snapshot block device without the aid of any cluster infrastructure.

A simple user space monitoring utility is planned, to receive reconnection requests from the snapshot client. These are delivered over a second, local socket connection. So the snapshot client has two socket connections: one to the server over the network, and a local connection to a monitor daemon. If both connections break, the snapshot target will give up and return failure for all further IO requests. The snapshot server must rely on the cluster infrastructure to satisfy the requirement that all snapshot clients reconnect and upload their read locks on server restart.

### Performance Optimizations

Various techniques can be used to improve the performance of the system. This discussion is based on using the smallest chunk size, 4K. Each new exception uses 20 bytes (exception store address, sharing bitmap and directory entry) so each btree leaf node holds a maximum of about 200 exceptions. Due to splitting, leaf nodes are normally not full. In fact worst case fullness of 50% is expected for the early implementations, so leaf nodes will hold about 100 exceptions each.

Larger chunk size will help performance for sequential and search for random write loads. The total size of metadata reduces linearly with the chunk size, saving space, IO bandwidth and seeking. On the other hand, larger chunks increase internal fragmentation of the snapshot store, especially for sparse, random access loads, and the overhead of metadata updating is supposed to be small in relation to data transfers. Therefore, it is contemplated that the performance and metadata size cost of small chunk sizes may be outweighed by reduced internal fragmentation, saving space in the snapshot store.

Larger metadata blocks will improve performance somewhat on largely serial write loads due to requiring a fewer number of larger IOs, especially if the snapshot metadata is fragmented.

A single server should be able to handle the traffic of many nodes of similar power to itself. The exception to this is copy-out overhead which could saturate a server's bus; a simple solution is available: farm out the copy-out traffic to lightly-loaded nodes as necessary.

The more snapshots that are held, the more btree leaf nodes will be required to hold them. Journaling the extra btree leaves to disk consumes IO bandwidth, causes more seeking and generates cache pressure. Reading in the extra btree nodes increases latency. However, because exceptions for all snapshots are stored adjacent in the btree, the overhead is not as large as if a separate map had to be updated on disk for each snapshot. Importantly, the process of determining whether a given chunk is shared never requires more than a single leaf node to be examined in preferred designs

Sharing bitmaps is used within leaf nodes to avoid having to enter any given snapshot store address more than once into the node, and to perform the function of specifying which snapshot uses a given snapshot store address. The worst case arises when a given logical chunk is written at least once after every snapshot. Then the leaf node entries for that chunk have a bitmap and a snapshot store address for every snapshot. Since leaf nodes are expected to be 50% full in the initial implementation, we can end up with one exception stored in each leaf node. Then the number of btree nodes that have to be journaled is equal to the number of chunks written. The journaled node has to be written twice, once to the journal and once to its true destination. So the worst case is a factor of 3 degradation in write performance due to btree updating alone. To ameliorate such degradation, it would be wise to use a larger chunk size when large numbers of snapshots are expected.

The worst case degradation above can be tempered somewhat by improving the btree update algorithm to use a b+tree algorithm, which guarantees 2/3rds leaf fullness, enough to hold two exceptions instead of one. Larger metadata blocks will help reduce seeking overhead, when they become practical. Eventually though, the best strategy is to introduce variant leaf node formats that optimize for the many-snapshots case by representing ranges of snapshot store chunks compactly, especially where the snapshot store chunks are allocated sequentially, which is something we want to achieve anyway.

The metadata update component of origin and snapshot write performance will degrade in early with the number of snapshots held, but with a much shallower slope than if snapshot store data were not shared and metadata were not grouped together by logical address. In the latter case, copy-out overhead would increase directly with number of snapshots. Exception table update overhead would increase rapidly as well, though the exact rate is harder to characterize because it depends on the chunk sharing patterns.

Origin write throughput is affected mainly by the frequency of chunk copy-outs and metadata update overhead. Copy-outs require reading and writing, requiring a minimum of 200% additional bandwidth vs. raw write and additional seeking as well, especially for the single-spindle case where the origin volume and snapshot store will be far apart. Throughput is improved at the expense of latency by batching the copy-out reads and copy-out writes, which happens naturally with asynchronous 10. There will thus be fewer long seeks between the origin and snapshot store.

Worst case origin write performance is obtained when the snapshot store is created with the smallest possible chunk size (4K) and the load requires a copy-out for every chunk write. Such a load is easy to generate, for example by setting a snapshot and then immediately unpacking an archive into the volume. Required IO bandwidth will triple, seeking between the origin and snapshot store will increase, and metadata updating will increase. Writing in this case should be largely linear and batching amortizes the seeking overhead, so the dominant effect is expected to be the increased IO bandwidth.

Fragmentation of the snapshot store will introduce additional seeking and rotational latency penalties. Reducing such fragmentation by clever snapshot store allocation policy will yield significant performance gains.

A load that consists of 100% single-sector writes distributed randomly over the entire volume immediately after setting a snapshot will cause copy-out bandwidth to be much more than 200% of raw write bandwidth, and will also cause a great deal of additional seeking. Metadata overhead will also increase significantly since typically only a single chunk on each leaf node may be updated each time the node is journaled to disk; rotational latency may increase significantly during metadata access. Performance under this random load will typically be dominated by seeking rather than bandwidth.

Fragmentation of the snapshot store can and should be addressed over time. Snapshot writes do not incur copy-out overhead. They do incur seeking and rotational penalties due to fragmentation in the snapshot store, but so do origin writes. Furthermore snapshot reads also suffer from fragmentation penalties, whereas origin reads do not. Snapshot store layout optimization of various embodiments of the present invention may reduce both the penalty for snapshot reading and writing, in which case general performance on a snapshot volume could be better than on a snapshotted origin volume.

Unlike origin reads, snapshot read throughput is affected by snapshot store fragmentation. Snapshot read latency is increased by the requirement of locking against origin writes. Read-ahead results in a kind of lock-ahead, so under loads where read-ahead is effective, increased snapshot read latency will not hurt read throughput. The predominant visible effect is expected to be read fragmentation. With large chunk sizes, *e.g*., 256K and up, moderate fragmentation should cause only slight degradation in snapshot read performance. However, without special attention to snapshot store allocation policy, fragmentation can be expected to be fairly severe, so snapshot read performance is not expected to be stellar in early implementations. Fortunately, since the main purpose of reading from a snapshot is to back it up or restore a few files, some read performance degradation is acceptable and is unlikely to be noticed. It is desirable to improve snapshot read performance by controlling snapshot store fragmentation as much as possible, in order to take advantage of the inherently superior performance of snapshot writing versus origin writing.

Snapshot writes do not require copy-outs; if an origin chunk or shared snapshot store chunk needs to be written, the logical chunk is first remapped to a new chunk in the snapshot store. By adapting the message protocol, writing to the chunk could proceed as soon as the new allocation is known, in parallel with the logging of the new exception. So snapshot writes are inherently quite efficient.

Snapshot write overhead comes from metadata update overhead and snapshot store fragmentation. The former is supposed to be small, on the order of a few percent. The latter could be very large, and probably will be in initial implementation, perhaps on the order of a factor of 10. Larger chunk sizes will reduced this seeking overhead, roughly linearly with the chunk size.

The amount of message data needed for each chunk is small, especially since the message format is designed from the outset to handle ranges of chunks and multiple ranges in each message. Except for snapshot reads, each message sequence may approximately be only two messages long. Server responses do not correspond exactly requests; e.g., any unshared chunks can be acknowledged immediately.

It is contemplated that overall snapshot efficiency can be improved by modifying the snapshot store allocation policy to the point where the origin can be made optional and all IO take place in the snapshot store.

It is contemplated that in some designs, to avoid bottlenecks, the server distributes the copy-out work to underused nodes. This will take significant IO bandwidth load off the server's bus at the expense of a little messaging latency. By doing this, a single server can likely scale to handle a hundred or so busy nodes of similar power to itself. Further scaling is easily achieved by dividing up the work between a number of snapshot servers, by logical address range. Each snapshot server maintains a separate btree in a distinct range of logical addresses and operates its own journal. Care must be taken that allocation bitmaps are divided up cleanly; this is not hard (*e.g*., even if a logical address range boundary lies in the middle of a bitmap block, the boundary bitmap can be replicated between two nodes, with logic to prevent allocation outside the boundary, which is needed anyway for error checking). Shared metadata such as the current snapshot list, superblock, etc., is
updated using a RW locking strategy (i.e., using a DLM). It is also possible to distribute the btrees and allocation bitmaps.

In some designs, the features described herein are adapted for single-node use. The messaging protocol can be used locally just as well as over the network, and because there can be multiple parallel processes on a single node, all the synchronization is still required. However, as an optimization, the messages themselves might be eliminated and replaced by some more efficient mechanism suitable for use within a single node, such as subroutine calls made directly to the parts of the server code that would be activated when the server handles messages, or in-memory task queues instead of server replies. This would eliminate the overhead of encoding sending and decoding the messages, which is not a large overhead but would be measurable. It could also help eliminate the memory inversion deadlock mentioned elsewhere.

Parts of the present invention and corresponding detailed description are presented in terms of software, computer programs, or algorithms. Software includes symbolic representations of operations or steps stored in the form of data bits within a computer memory. An algorithm is a sequence of steps leading to a desired result(s). The steps are those requiring physical manipulations of physical quantities. Usually, though not necessarily, these quantities take the form of optical, electrical, or magnetic signals capable of being stored, transferred, combined, compared, and otherwise manipulated. Unless specifically stated otherwise, or as is apparent from the discussion, terms such as "processing" or "determining" or the like refer to the actions and processes of a computer system, or similar electronic computing device, that manipulates and transforms data represented as physical, electronic quantities within the computer system's memories into other data similarly represented as physical quantities within the computer system's memories or registers or other such information storage, transmission or display devices.

## Claims

1. A computer assisted method of organizing a data structure for managing a computer storage device (103) that contains a plurality of blocks, wherein an origin volume and snapshot stores use the storage device to store origin volume data and snapshot store data, and wherein when a snapshot is first created, it is identical to the origin volume, the method comprising the following sequence of steps:
(a) initializing entries of the data structure to indicate that the blocks are shared between the origin volume and one or more snapshot stores, wherein:
each entry is associated with a chunk that includes multiple blocks and represents a granularity of snapshot copy-outs the data structure is implemented using a btree structure including a set of index nodes (501) and leaf nodes (503), the leaf nodes including a header, a table of exceptions (601) and a directory map (603);
for each chunk, a list of exceptions is stored which includes a snapshot address and a bitmap specifying which snapshots share that exception; and
exceptions for all snapshots are stored in the btree indexed by logical chunk address such that a logical chunk is shared unless all active snapshots have exceptions for that chunk;
(b) receiving a request to modify a first portion of the origin volume;
(c) identifying a first chunk that contains the first portion to be modified; and
(d) consulting the btree to determine whether or not all snapshots have exceptions for the first chunk and thus whether the first chunk is shared or unshared; and
if it is determined in step (d) that the first chunk is shared:
writing first metadata into an entry of the data structure to indicate that the first chunk is unshared, wherein writing the first metadata comprises associating the first chunk with one of the leaf nodes in the btree structure and creating an exception for the associated leaf node for the chunk to indicate that the chunk in unshared;
copying data of the first chunk into the snapshot store and recording the address of the copied chunk in the snapshot store as part of the exception; and
allowing the first chunk to be modified in the origin volume;
if it is determined in step (d) that the first chunk is unshared:
allowing the first chunk to be modified in the origin volume.

2. A computer program product, residing on a computer readable medium, for use in organizing a data structure for managing a computer storage device (103) that contains a plurality of blocks, wherein origin and snapshot stores use the storage device to store origin volume data and snapshot store data, and wherein when a snapshot is first created, it is identical to the origin volume, said computer program product comprising instructions for causing a computer to perform the method according to claim 1.

3. A computing system for organizing a data structure for managing a computer storage device (103) that contains a plurality of blocks, wherein origin and snapshot stores use the storage device to store origin volume data and snapshot store data, and wherein when a snapshot is first created, it is identical to the origin volume, wherein the computer system is adapted to perform the method according to claim 1.

## Patentansprüche

1. Computergestütztes Verfahren zum Organisieren einer Datenstruktur zum Verwalten eines Computerspeichergeräts (103), das eine Vielzahl von Blöcken beinhaltet, wobei ein Origin-Volumen und Snapshot-Speicher das Speichergerät verwenden, um Origin-Volumendaten und Snapshot-Speicherdaten zu speichern, und wobei ein Snapshot zu dem Origin-Volumen identisch ist, wenn erstmals erstellt wird, wobei das Verfahren die folgende Schrittabfolge umfasst:
(a) Initialisieren von Einträgen der Datenstruktur, um anzuzeigen, dass die Blöcke zwischen dem Origin-Volumen und einem oder mehreren Snapshot-Speicher geteilt werden, wobei:
jeder Eintrag einem Chunk zugeordnet ist, der mehrere Blöcke beinhaltet und eine Granularität von Snapshot-Kopien repräsentiert
die Datenstruktur unter Verwendung einer B-Baumstruktur implementiert wird, die eine Reihe von Indexknoten (501) und Blattknoten (503) beinhaltet, wobei die Blattknoten einen Kopf, eine Ausnahmentabelle (601) und eine Verzeichniskarte (603) beinhalten;
für jeden Chunk eine Ausnahmenliste gespeichert wird, die eine Snapshot-Adresse und eine Bitmap beinhaltet, die spezifiziert, welche Snapshots diese Ausnahme teilen; und
Ausnahmen für alle Snapshots in der B-Baumstruktur gespeichert sind, die durch eine logische Chunkadresse indexiert wird, so dass ein logischer Chunk geteilt wird, es sei denn, dass alle aktiven Snapshots Ausnahmen für diesen Chunk haben;
(b) Empfangen einer Anfrage zum Ändern eines ersten Abschnitts des Origin-Volumens;
(c) Identifizieren eines ersten Chunks, der den ersten zu ändernden Abschnitt beinhaltet; und
(d) Konsultieren des B-Baums, um festzustellen, ob alle Snapshots Ausnahmen für den ersten Chunk haben und ob somit der erste Chunk geteilt oder ungeteilt ist; und
wenn in Schritt (d) festgestellt wurde, dass der erste Chunk geteilt ist:
Schreiben erster Metadaten in einen Eintrag der Datenstruktur, um anzuzeigen, das der erste Chunk ungeteilt ist, wobei das Schreiben der ersten Metadaten das Zuordnen des ersten Chunks einem der Blattknoten in der B-Baumstruktur und das Erstellen einer Ausnahme für den zugeordneten Blattknoten für den Chunk umfasst, um anzuzeigen, dass der Chunk ungeteilt ist;
Kopieren von Daten des ersten Chunks in den Snapshot-Speicher und Aufzeichnen der Adresse des kopierten Chunks im Snapshot-Speicher als Teil der Ausnahme; und
Erlauben des Änderns des ersten Chunks im Origin-Volumen;
wenn in Schritt (d) festgestellt wurde, dass der erste Chunk ungeteilt ist:
Erlauben, dass der erste Chunk in dem Origin-Volumen verändert wird.

2. Computerprogrammprodukt, das sich auf einem computerlesbaren Medium befindet, zur Verwendung beim Organisieren einer Datenstruktur zum Verwalten eines Computerspeichergeräts (103), das eine Vielzahl von Blöcken beinhaltet, wobei Origin- und Snapshot-Speicher das Speichergerät verwenden, um Origin-Volumendaten und Snapshot-Speicherdaten zu speichern, und wobei ein Snapshot zu dem Origin-Volumen identisch ist, wenn er erstmals erstellt wurde, wobei das Computerprogrammprodukt Anweisungen umfasst, die einen Computer dazu veranlassen, das Verfahren nach Anspruch 1 durchzuführen.

3. Rechensystem zum Organisieren einer Datenstruktur zum Verwalten eines Computerspeichergeräts (103), das eine Vielzahl von Blöcken beinhaltet, wobei Origin- und Snapshot-Speicher das Speichergerät verwenden, um Origin-Volumendaten und Snapshot-Speicherdaten zu speichern, und wobei ein Snapshot zu dem Origin-Volumen identisch ist, wenn er erstmals erstellt wurde, wobei das Computersystem angepasst ist, das Verfahren nach Anspruch 1 durchzuführen.

## Revendications

1. Procédé assisté par ordinateur d'organisation d'une structure de données permettant de gérer un dispositif de stockage informatique (103) qui contient une pluralité de blocs, dans lequel un volume d'origine et des stockages d'instantanés utilisent le dispositif de stockage pour stocker des données de volume d'origine et des données de stockage d'instantanés, et dans lequel lorsqu'un instantané est créé pour la première fois, il est identique au volume d'origine, le procédé comprenant la séquence d'étapes suivante :
(a) initialisation d'entrées de la structure de données pour indiquer que les blocs sont partagés entre le volume d'origine et l'un ou plusieurs des stockages d'instantanés, dans lequel :
chaque entrée est associée à un tronçon qui inclut de multiples blocs et représente une granularité de sorties de copies d'instantanés
la structure de données est déployée à l'aide d'une structure en arbre B incluant un ensemble de noeuds index (501) et des noeuds feuille (503), les noeuds feuille incluant un en-tête, une table d'exceptions (601) et une carte de répertoires (603) ;
pour chaque tronçon, une liste d'exceptions est stockée qui inclut une adresse d'instantané et un table de bits indiquant quels instantanés partagent cette exception ; et
des exceptions pour tous les instantanés sont stockées dans l'arbre B indexé par des adresses de tronçons logiques, de sorte qu'un tronçon logique soit partagé sauf si tous les instantanés actifs ont des exceptions pour ce tronçon ;
(b) réception d'une requête de modifier une première partie du volume d'origine ;
(c) identification d'un premier tronçon qui contient la première partie devant être modifiée ; et
(d) consultation de l'arbre B pour déterminer si oui ou non tous les instantanés ont des exceptions pour le premier tronçon et ainsi si le premier tronçon est partagé ou non partagé ; et s'il est déterminé à l'étape (d) que le premier tronçon est partagé :
écriture de premières méta-données dans une entrée de la structure de données pour indiquer que le premier tronçon n'est pas partagé, dans lequel l'écriture des premières méta-données comprend l'association du premier tronçon avec l'un des noeuds feuilles dans la structure d'arbre B et la création d'une exception pour le noeud feuille associé pour le tronçon pour indiquer que le tronçon n'est pas partagé ;
copie des données du premier tronçon dans le stockage d'instantané et enregistrement de l'adresse du tronçon copié dans le stockage d'instantané comme faisant partie de l'exception ; et autorisation du premier tronçon devant être modifié dans le volume d'origine ; s'il est déterminé à l'étape (d) que le premier tronçon n'est pas partagé :
autorisation du premier tronçon devant être modifié dans le volume d'origine.

2. Produit de programme informatique, basé sur un support lisible par ordinateur, à utiliser dans une structure de données permettant de gérer un dispositif de stockage informatique (103) qui contient une pluralité de blocs, dans lequel un volume d'origine et des stockages d'instantanés utilisent le dispositif de stockage pour stocker des données de volume d'origine et des données de stockage d'instantané, et dans lequel lorsqu'un instantané est créé pour la première fois, il est identique au volume d'origine, ledit produit de programme informatique comprenant des instructions pour amener un ordinateur à exécuter le procédé selon la revendication 1.

3. Système informatique permettant d'organiser une structure de données permettant de gérer un dispositif de stockage informatique (103) qui contient une pluralité de blocs, dans lequel un volume d'origine et des stockages d'instantanés utilisent le dispositif de stockage pour stocker des données de volume d'origine et des données de stockage d'instantané, et dans lequel lorsqu'un instantané est créé pour la première fois, il est identique au volume d'origine, dans lequel le système informatique est adapté pour exécuter le procédé selon la revendication 1.
